# DEMANDE DE BREVET EUROPEEN

(11) **EP 2 431 875 A1**
(43) Date de publication de la demande: **21.03.2012**
(21) Numéro de dépôt: 11168251.4
(22) Date de dépôt: 31.05.2011
(51) Int. Cl.: G06F 9/48, G06F 15/78, G06F 9/50

(54) **Processeur sur puce électronique comportant un moniteur temps réel matériel**

(30) Priorité: 08.06.2010 FR 1002416
(71) Demandeur: Thales, 92200 Neuilly Sur Seine (FR)
(72) Inventeur: Grossi, Philippe, 26027 Valence Cedex (FR)
(74) Mandataire: Esselin, Sophie

(57) **Abrégé**

L'invention concerne un processeur sur puce électronique apte à exécuter des processus de calcul, chacun desdits processus étant associé à une priorité, caractérisé en ce qu'il comporte des moyens pour la gestion des processus, les moyens pour la gestion des processus étant réalisés de façon matérielle, la gestion des processus comprenant l'activation et la suspension des processus et la gestion l'exécution des processus en fonction de leurs priorités.

## Description

L'invention concerne les systèmes temps réel et plus particulièrement les processeurs synthétisables.

Les processeurs synthétisables peuvent être synthétisés en portes logiques à partir de descriptions de haut niveau, par exemple en langage VHDL (pour VHSIC Hardware Description Language).

Ces processeurs peuvent être mono ou multi coeurs c'est-à-dire qu'ils peuvent comporter un ou plusieurs processeurs. Ces processeurs peuvent être synthétisés sur des cibles Asic (pour Application-Specific Integrated Circuit) qui sont des circuits intégrés spécialisés ou sur des cibles PLD (pour Programmable Logic Devices) qui sont des circuits logiques programmables tels que des CPLD (Complex Programmable Logic Devices) ou des FPGA (Field-programmable Gate Array).

La prise en compte du temps réel par un système apte à exécuter des processus est lié d'une part aux capacités du matériel (processeurs, gestionnaires d'interruption, etc) et, d'autre part, aux capacités du système d'exploitation (ou OS pour Operating System) et plus particulièrement du moniteur temps réel. Le moniteur temps réel a pour fonction la gestion des processus. La gestion des processus comprend : l'ordonnancement des processus, la gestion des priorités de processus, la création et l'activation des processus, l'arrêt/suspension des processus. Pour rappel, il existe différentes catégories de système d'exploitation : les systèmes d'exploitation temps réel dur (ou hard real time operating systems), les systèmes d'exploitation temps réel (soft real time operating systems) et les systèmes d'exploitation standards.

La notion de temps réel est liée au déterminisme et au temps nécessaire à un système d'exploitation pour changer de contexte. On appelle changement de contexte un basculement du traitement d'un processus par le processeur vers le traitement d'un autre processus. Lorsque ce temps est déterministe, on parle de temps réel. Quand ce temps de latence est réduit, on parle alors de temps réel dur. Lorsque ce temps n'est pas un critère, le système d'exploitation n'est pas classifié temps réel.

Les systèmes d'exploitation temps réel selon l'art connu peuvent prétendre à un changement de contexte, sur interruption, de l'ordre de la micro seconde (2-15µs) avec une déviation de l'ordre de la demi-micro seconde (déterminisme ∼0.5µs).

Le problème de déterminisme et de latence est aujourd'hui généralement résolu au travers de plusieurs solutions :
- le recours à des solutions externes câblées sur carte ou FPGA qui présente l'inconvénient d'ajouter des contraintes sur les architectures (fonctions câblées externes) verrouillant le système (évolution, maintenabilité, etc),
- la réduction des taux de charge des processeurs pour accroître leur disponibilité qui a pour inconvénient de conduire à surdimensionner des systèmes, et
- l'augmentation des fréquences systèmes et internes des processeurs qui implique une augmentation de la consommation électrique des systèmes.

Les systèmes dits critiques, les applications avioniques par exemple, comportent non seulement des contraintes de temps réel mais en plus des contraintes de sureté de fonctionnement. Ces contraintes de sureté de fonctionnement garantissent une meilleure fiabilité des systèmes.

Le problème de sûreté de fonctionnement est généralement résolu au travers de systèmes d'exploitation spécifiques et d'architectures numériques complexes associant processeurs spéciaux et processeurs logiques programmable ce qui conduit à plusieurs inconvénients : un surcoût financier (surdimensionnement des systèmes, développements de système d'exploitation spécifiques) et une réduction des performances processeurs due à la désactivation de certains sous systèmes par exemple des caches mémoires et des branchement spéculatifs (ou speculative branching).

L'invention vise notamment à pallier les problèmes cités précédemment en proposant un processeur sur puce électronique apte à exécuter des processus permettant d'améliorer le déterminisme et le temps de latence pour des applications embarquées sur puce électronique.

A cet effet, l'invention a pour objet un processeur sur puce électronique apte à exécuter des processus de calcul, chacun desdits processus étant associé à une priorité, caractérisé en ce qu'il comporte des moyens pour la gestion des processus, les moyens pour la gestion des processus étant réalisés de façon matérielle, la gestion des processus comprenant l'activation et la suspension des processus et la gestion l'exécution des processus en fonction de leur priorité.

L'invention a pour avantage de réduire la latence des processeurs de façon importante. En effet avec l'invention, un changement de contexte peut être réalisé en un ou deux cycles du processeur. Pour un processeur cadencé à 100Mhz, le temps de changement de contexte est alors de l'ordre la dizaine de nanosecondes. La réduction du temps de changement de contexte est primordiale lorsque le ratio temps de changement de contexte sur temps de calcul est élevé. C'est le cas dans des systèmes comportant de nombreux processus où les processus requièrent relativement peu de temps de calcul.

L'invention permet aussi d'accroître le déterminisme des processeurs en éliminant le code de changement de contexte et donc le temps associé.

L'invention a aussi pour avantage de réduire la consommation mémoire et la charge de calcul du système d'exploitation temps réel. La gestion des processus n'est pas réalisée de façon logicielle comme dans l'état de la technique. Elle est prise en charge directement de façon matérielle. Elle ne consomme donc pas de mémoire ni de temps de calcul processeur.

Selon une caractéristique de l'invention, chaque processus comprend un programme décrit sous la forme d'instructions, le processeur comprenant, en outre, une mémoire de programme pour stocker les instructions des programmes, une mémoire de données pour stocker des données manipulées par les programmes, une unité arithmétique et logique pour exécuter des opérations arithmétiques et logiques, et un contrôleur pour décoder les instructions des programmes et actionner l'unité arithmétiques et logiques en fonction des instructions décodées, les moyens pour la gestion des processus étant intégrés au contrôleur.

Selon un mode de réalisation préféré, la mémoire de programme comprenant une pluralité de pages, la mémoire de données comprenant une pluralité de pages, et l'unité arithmétique et logique comprenant une pluralité de banques de registre pour stocker des calculs intermédiaires, chaque processus est associé à une page de la mémoire de programmes, une page de la mémoire de données et une banque de registre qui lui sont dédiées.

Ces caractéristiques permettent d'une part de réduire les coûts de changement contextuels et d'autre part d'accroître la sécurité de fonctionnement des processeurs. C'est particulièrement important dans des domaines critiques tels que les applications avioniques ou ferroviaires. La sécurité de fonctionnement est obtenue grâce à une ségrégation physique des données et des programmes au sein même d'un coeur synthétisable.

L'invention sera mieux comprise et d'autres avantages apparaîtront à la lecture de la description détaillée faite à titre d'exemple non limitatif et à l'aide des figures parmi lesquelles :
La figure 1 représente une architecture d'un processeur selon l'invention.
La figure 2 représente une vue simplifiée d'un contrôleur.
La figure 3 représente une architecture d'un processeur selon l'invention avec des mémoires physiquement séparées.

L'invention concerne un processeur sur puce électronique apte à exécuter des processus de calcul. Le processeur comporte des moyens pour la gestion des processus réalisés de façon matérielle. La gestion des processus comprend l'activation et la suspension des processus et la gestion l'exécution des processus en fonction de leurs priorités.

Chacun des processus est associé à une priorité. L'ordre d'exécution des processus étant déterminé à partir de ces priorités. Chacun des processus comprend un programme décrit sous la forme d'instructions.

L'enfouissement des moyens de gestion des processus dans un processeur nécessite un processeur à l'architecture dédié.

L'enfouissement implique la contrainte que le processeur doit être spécifiquement développé avec un système d'exploitation (ou OS pour Operating System) enfoui. Les processeurs de l'état de la technique implémentent une logique de contrôle à l'extérieur du processeur.. L'intérêt de l'enfouissement et de gagner en vitesse et surtout en sécurité de fonctionnement, le contrôleur a accès à tous les mécanismes internes du processeur.

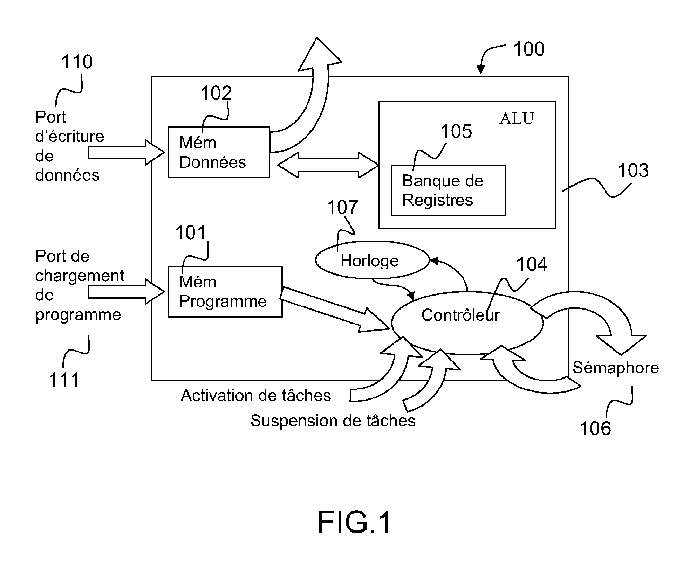

La figure 1 représente une architecture d'un processeur comportant des moyens de gestion des processus assurés de façon matérielle. Cette représentation est simplifiée pour la compréhension du mécanisme mis en jeu, et ne représente donc pas de manière exhaustive le contenu d'un processeur, tels que FPU, contrôleurs mémoires, gestion des entrées/sorties, etc.

Le processeur 100 comprend:
- une mémoire de programmes 101 pour stocker les instructions des programmes, les programmes provenant d'un port de chargement de programme 111,
- une mémoire de données 102 pour stocker des données manipulées par les programmes, par exemple des données provenant d'un port d'écriture de données 110 ou des résultats provenant d'une unité arithmétique et logique 103,
- une unité arithmétique et logique (ALU) 103 pour exécuter des opérations arithmétiques et logiques, et
- un contrôleur 104 pour décoder les instructions des programmes stockés dans la mémoire de programmes 101 et pour actionner l'unité arithmétique et logique 103 en fonction des instructions décodées.

Le contrôleur 104 reçoit des signaux externes par exemple:
- Activation de tâche activant l'exécution d'un processus,
- Suspension de tâche mettant en suspend l'exécution d'un processus,
- Terminaison de tâche terminant l'exécution d'un processus.
- Sémaphores 106 pour autoriser ou restreindre l'accès à une ressource partagée par d'autres processeurs par exemple,
- Horloge pour réveiller (activer) les processus en attente à un instant défini ou interrompre une boucle d'attente infinie (time-out).

Les sémaphores 106 sont aussi utilisés pour piloter le contrôle des processus. Le contrôle des processus est donc réalisé de façon matérielle.

Le contrôleur peut recevoir également des signaux appelés déclencheurs de modification de mémoire partagée (Datamemory triggers en anglais) permettant de réveiller des processus en attente de ce type d'événements.

Le contrôleur 104 tient à jour une table d'enregistrement des états des processus (actifs, priorité, privilèges, etc) pour sa gestion interne des processus, mais également pour verrouiller/autoriser les chargements de nouveaux programmes/processus dans ces mémoires programmes.

Un moniteur temps réel est implanté de façon matérielle au sein du contrôleur 104. Le contrôleur comprend un pipeline de décodage d'instructions auquel est ajouté un mécanisme pour la gestion des processus comprenant : l'activation et la suspension de processus, la gestion des priorités de processus, des sémaphores, des délais, etc.

Le contrôleur 104 assure l'ensemble des fonctions primaires d'un système d'exploitation (ordonnancement de processus, sémaphores, horloge) permettant de créer et de gérer un système multiprocessus.

Les synchronisations de processus sont confiées classiquement à un mécanisme de sémaphores et des files de messages.

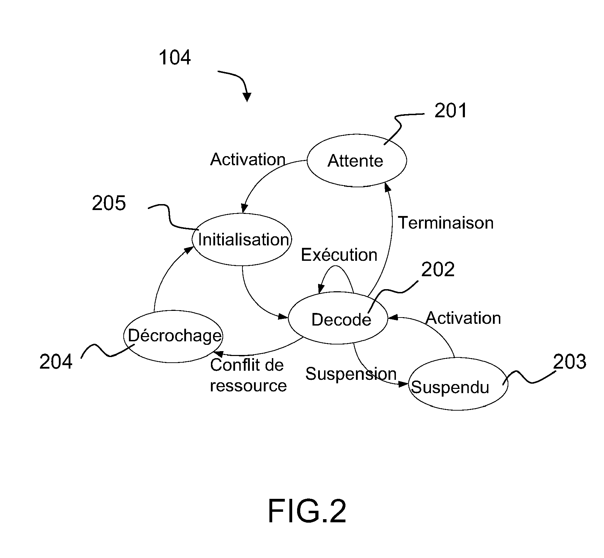

La figure 2 représente une vue simplifiée du contrôleur 104. La gestion des sémaphores et les tables de contrôle des tâches ne sont pas représentées sur la figure.

Selon une caractéristique de l'invention, le contrôleur 104 comporte un automate à états comprenant les états suivants :
- Le décodage 202 correspondant à un état d'exécution d'un processus où des instructions provenant d'un pipeline sont décodés,
- L'attente 201 correspondant à un état d'attente d'un processus à la fin de son décodage ; un processus en attente peut être réactivé, il passe alors dans état d'initialisation 205 ;
- Initialisation (Fetch) 205 correspond à une initialisation du pipeline délivrant les instructions, à la fin de l'initialisation le processus est prêt pour le décodage ;
- La suspension 203 correspond à un état d'arrêt du processus suite par exemple à un signal indiquant un processus plus prioritaire à exécuter ou indiquant qu'un sémaphore n'est pas prêt, un processus suspendu peut être activé par exemple par un signal indiquant qu'il est le plus prioritaire ou que le sémaphore est prêt ;
- Le décrochage (Stall) 204 par exemple suite à un conflit de ressource, permet au contrôleur de résoudre le conflit et de re-synchroniser le pipeline.

Dans une variante de réalisation de l'invention le processeur comprend une mémoire partagée pour permettre l'échange de donnée entre processus. Dans ce cas, le contrôleur assure aussi des fonctions auxiliaires complétant la sûreté de fonctionnement comme par exemple le contrôle l'accès à la mémoire partagée par un système de verrouillage et déverrouillage de la mémoire.

Le contrôleur peut aussi assurer le contrôle d'accès en écriture d'une page programme lorsqu'un processus est actif, à l'aide de ses tables d'enregistrements de gestion des processus.

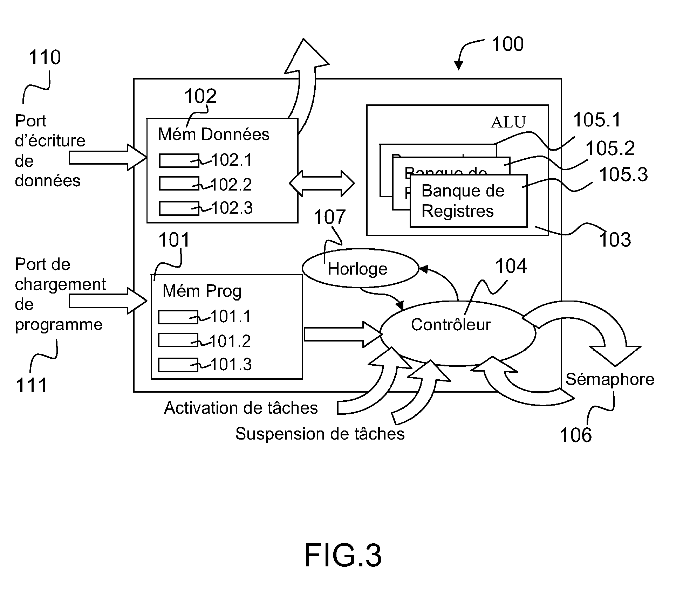

La figure 3 représente une variante de l'invention dans laquelle la mémoire de programmes 101 comprend une pluralité de pages 101.1, 101.2, 101.3 ; la mémoire de données 102 comprend une pluralité de pages 102.1, 102.2, 102.3 ; et l'unité arithmétique et logique 103 comprend une pluralité de banques de registre 105.1, 105.2, 105.3 pour stocker des calculs intermédiaires. Chaque processus est associé à une page de la mémoire de programme 101, une page de la mémoire de données 102 et une banque de registre 105.1, 105.2, 105.3 qui lui sont dédiées.

Ainsi, chaque processus possède sa page programme, sa page données et une banque de registre dédiée, assurant ainsi une stricte ségrégation physique des données.

La ségrégation physique permet une isolation des contextes et améliore donc la sureté de fonctionnement du processeur.

Une page mémoire spéciale (mémoire partagée) permet l'échange des données entre les processus internes et avec les autres processeurs.

L'isolation des pages permet également d'accélérer le changement de contexte : aucune sauvegarde de contexte n'étant plus nécessaire.

L'invention concerne aussi un système multiprocesseur sur puce électronique comportant une pluralité de processeurs selon l'invention. Les processeurs sont connectés entre eux par des moyens déjà connus tel que : un Bus Maître/esclave ou multi-maître avec arbitrage, une connexion en anneau, des multiplexeurs de bus à plusieurs couches (multi layers switch), etc. Le système multiprocesseur comporte en outre des moyens pour accéder à une unité de mémoire externe de type DDR (pour double data rate) ou des mémoires asynchrones Flash ou SRAM (pour Static Random Access Memory) par exemple, au travers de contrôleurs mémoire dédiés (DMA : Direct memory access).

## Revendications

1. Processeur (100) sur puce électronique apte à exécuter des processus de calcul, chacun desdits processus étant associé à une priorité, **caractérisé en ce qu'**il comporte des moyens pour la gestion des processus, les moyens pour la gestion des processus étant réalisés de façon matérielle, la gestion des processus comprenant l'activation et la suspension des processus et la gestion l'exécution des processus en fonction de leur priorité,, chaque processus comprenant un programme décrit sous la forme d'instructions, le processeur comprenant, en outre, une mémoire de programme (101) pour stocker les instructions des programmes, une mémoire de données (102) pour stocker des données manipulées par les programmes, une unité arithmétique et logique (103) pour exécuter des opérations arithmétiques et logiques, et un contrôleur (104) pour décoder les instructions des programmes et actionner l'unité arithmétiques et logiques en fonction des instructions décodées, les moyens pour la gestion des processus étant intégrés au contrôleur (104), la mémoire de programme (101) comprenant une pluralité de pages (101.1, 101.2, 101.3), la mémoire de données (102) comprenant une pluralité de pages (102.1, 102.2, 102.3), et l'unité arithmétique et logique (103) comprenant une pluralité de banques de registre (105.1, 105.2, 105.3) pour stocker des calculs intermédiaires, chaque processus étant associé à une page de la mémoire de programmes (101), une page de la mémoire de données (102) et une banque de registre (105.1, 105.2, 105.3) qui lui sont dédiées.

2. Processeur selon la revendication 1, dans lequel le contrôleur (104) comporte un automate à états comprenant les états suivants :
- Le décodage (202) correspondant à un état d'exécution d'un processus où des instructions provenant d'un pipeline sont décodés,
- L'attente (201) correspondant à un état d'attente d'un processus à la fin de son décodage, un processus en attente pouvant être réactivé et passant alors dans état d'initialisation 205 ;
- L'initialisation (205) correspond à une initialisation d'un pipeline délivrant les instructions,
- La suspension (203) correspond à un état d'arrêt du processus,
- Le décrochage (204) survenant suite à un conflit de ressource et permettant au contrôleur de résoudre le conflit et de resynchroniser le pipeline.

3. Système multiprocesseur sur puce électronique, **caractérisé en ce qu'**il comporte une pluralité de processeurs selon l'une des revendications 1 ou 2.
